# EUROPÄISCHE PATENTSCHRIFT

(11) **EP 4 444 563 B1**
(45) Veröffentlichungstag und Bekanntmachung des Hinweises auf die Patenterteilung: **18.03.2026**
(21) Anmeldenummer: 22822984.5
(22) Anmeldetag: 29.11.2022
(51) Int. Cl.: B60K 15/05

(54) **ELEKTRISCHER KLAPPENANTRIEB, KLAPPENANORDNUNG UND KLAPPENBETAETIGUNGSVERFAHREN**
ELECTRIC FLAP DRIVE, FLAP ASSEMBLY, AND FLAP ACTUATION METHOD
ENTRAÎNEMENT DE VOLET ÉLECTRIQUE, ENSEMBLE VOLET ET PROCÉDÉ DE COMMANDE DE VOLET

(30) Priorität: 08.12.2021 DE 102021132330
(43) Veröffentlichungstag der Anmeldung: 16.10.2024
(73) Patentinhaber: Prettl, Johannes, 72793 Pfullingen (DE)
(72) Erfinder: BORST, Peter, 88527 Unlingen-Uigendorf (DE); KUKANOV, Sergej, 72116 Moessingen (DE)
(74) Vertreter: Witte, Weller & Partner Patentanwälte mbB
(86) Internationale Anmeldenummer: PCT/EP2022/083575
(87) Internationale Veröffentlichungsnummer: WO 2023/104577

(56) Entgegenhaltungen:
- EP-A1- 3 734 007
- WO-A1-2006/008280
- DE-A1- 10 334 719
- DE-A1- 102008 011 559
- DE-A1- 102017 104 514
- DE-B3- 102012 108 366
- US-A1- 2018 202 212

## Beschreibung

Die vorliegende Erfindung betrifft einen elektrischen Klappenantrieb, insbesondere für eine Lade- oder Tankklappe eines Kraftfahrzeugs, mit einem Elektromotor, der eine Antriebswelle aufweist und mit einer Abtriebswelle, die mit einer Klappe koppelbar ist.

Ferner betrifft die vorliegende Erfindung eine Klappenanordnung mit einer Klappe zum Verschließen einer Öffnung und mit einem elektrischen Klappenantrieb, mittels dessen die Klappe zwischen einer Schließstellung und einer Offenstellung und/oder zwischen einer Offenstellung und einer Schließstellung bewegbar ist.

Schließlich betrifft die vorliegende Erfindung ein Verfahren zum Öffnen und/oder zum Schließen einer Klappe mittels eines elektrischen Klappenantriebs.

Elektrische Klappenantriebe sind generell bekannt. Beispielsweise ist es bekannt, die Heckklappe eines Kraftfahrzeugs elektrisch zu öffnen und/oder zu schließen. Zum Öffnen dient hierbei in der Regel eine außen an der Klappe zugängliche Griffanordnung. Zum Schließen dient in der Regel eine weitere Bedientaste, die im Bereich einer Innenverkleidung der Heckklappe angeordnet und bei geöffneter Klappe zugänglich ist.

Auf dem Gebiet der Tankklappen und Ladeklappen für Kraftfahrzeuge sind mechanische Öffnungssysteme bekannt. Hierbei ist es bspw. bekannt, mit der Hand gegen die Klappe zu drücken, wodurch diese entriegelt wird und durch eine mechanische Federvorspannung leicht aufspringt. Anschließend kann die Klappe per Hand in die Offenposition verschwenkt werden. Es ist auch bekannt, die Entriegelung elektromechanisch aus der Ferne durchzuführen, beispielsweise mittels einer Taste im Innenraum eines Kraftfahrzeugs. Das Schließen der Öffnung erfolgt in der Regel wiederum durch Verschließen von Hand bis in eine Verriegelungsposition, in der die Klappe dann verriegelt bleibt und die Öffnung schließt.

Lade- oder Tankklappenanordnungen weisen zudem in der Regel hinter der Klappe eine Art Spritzwand auf, aus der heraus sich beispielsweise ein Tankstutzen erstreckt oder eine Ladebuchse. Die Klappe muss in diesem Fall nicht unbedingt dichtend gegenüber der umgebenden Fahrzeugkarosserie ausgebildet sein. In den Bereich der Ladeklappe eindringendes Wasser wird von der Spritzwand aufgefangen und dort bspw. über eine Abtropföffnung oder dergleichen abgeführt.

Bei Ladeklappen für Elektrofahrzeuge (reine Elektrofahrzeuge oder Plug-in-Fahrzeuge) ist es auch bereits bekannt, die Klappe elektrisch anzutreiben. Hierzu ist in vielen Fällen neben der Ladeklappe eine Taste vorgesehen, die von der Bedienperson betätigt wird. Durch Betätigung der Taste wird die Klappe elektromotorisch geöffnet, und zwar in eine Offenstellung. Durch nochmaliges Betätigen derselben Taste wird die Klappe dann wiederum in die Schließstellung verfahren. Hierbei ist problematisch, dass die elektronische Taste außen an der Fahrzeugkarosserie zugänglich sein muss, was für einen erheblichen Fertigungsaufwand sorgt und hinsichtlich der Abdichtung nicht unproblematisch ist. Alternativ kann eine Betätigungstaste im Innenraum vorgesehen sein. Generell ist es jedoch bevorzugt, wenn die Klappe von außen betätigbar ist.

Die Klappe kann zudem im Winter aufgrund von Eisregen oder dergl. durch eine um den Klappenrand umlaufende Eisschicht blockiert werden, was zu Problemen bei einer elektromotorischen Betätigung führen kann.
Die europäische Patentanmeldung EP 3 734 007 A1 offenbart einen Klappenantrieb für Hauben, Türen, Klappen und dergleichen eines Kraftwagens mit einem den Elektromotor, der über eine elektromagnetische Brems- und Kupplungseinheit und eine Rutschkupplung die Haube, Türe, Klappe oder dergleichen des Kraftwagens öffnet und schließt. Mit der Brems- und Kupplungseinheit lässt sich die Haube, Türe, Klappe oder dergleichen in jeder Schwenkstellung feststellen. Ein Drehmomentsensor im Klappenantrieb misst eine auf die Haube, Türe, Klappe oder dergleichen ausgeübte Bedienerkraft um den Klappenantrieb zu starten.

Es ist vor diesem Hintergrund eine Aufgabe der Erfindung, einen verbesserten elektrischen Klappenantrieb, eine verbesserte Klappenanordnung und ein verbessertes Verfahren zum Öffnen und/oder Schließen einer Klappe mittels eines elektrischen Klappenantriebs anzugeben.

Die obige Aufgabe wird gelöst durch einen elektrischen Klappenantrieb, mit den Merkmalen des Anspruchs 1, insbesondere für eine Lade- oder Tankklappe eines Kraftfahrzeugs, mit einem Elektromotor, der eine Antriebswelle aufweist, mit einer Abtriebswelle, die mit einer Klappe koppelbar ist, mit einer Antriebsgetriebeanordnung, die eine Übersetzung zwischen der Antriebswelle und der Abtriebswelle einrichtet, mit einer Kupplungsanordnung, die ein mit der Antriebswelle verbundenes Eingangsglied und ein mit der Abtriebswelle verbundenes Ausgangsglied aufweist, die in einer Grundposition reibschlüssig gekoppelt sind, und mit einer Sensoranordnung, die dazu eingerichtet ist, einen Schlupf der Kupplungsanordnung zu erfassen, wie er durch eine betätigende Bewegung der Klappe verursacht wird.

Ferner wird die Aufgabe gelöst durch eine Klappenanordnung mit einer Klappe zum Verschließen einer Öffnung und mit einem elektrischen Klappenantrieb der erfindungsgemäßen Art, mittels dessen die Klappe zwischen einer Schließstellung und einer Offenstellung und/oder zwischen einer Offenstellung und einer Schließstellung bewegbar ist.

Schließlich wird die obige Aufgabe gelöst durch ein Verfahren nach Anspruch 15, zum Öffnen und/oder zum Schließen einer Klappe mittels eines elektrischen Klappenantriebs der erfindungsgemäßen Art, mit den Schritten, einen Schlupf der Kupplungsanordnung zu erfassen, der durch eine betätigende Bewegung der Klappe verursacht ist, und den Elektromotor anzusteuern, um die Klappe von der Schließstellung in die Offenstellung oder umgekehrt zu verfahren.

Der elektrische Klappenantrieb kann insbesondere hinter einer Spritzwand der Lade- oder Tankklappe montiert werden und kann daher in einer geschützten Umgebung eingebaut werden. Die Erfassung eines Wunsches eines Benutzers, die Klappe zu öffnen oder zu schließen, erfolgt über eine Betätigung der Klappe selbst. Ähnlich wie bei rein mechanischen Entriegelungssystemen wird die Klappe beispielsweise ausgehend von der Schließstellung angedrückt (also beispielsweise in Richtung der Spritzwand). Diese Andrückbewegung bzw. Tastbewegung kann dann mittels der Sensoranordnung in dem elektrischen Klappenantrieb erfasst werden. Es ist folglich kein externer Taster oder eine sonstige Betätigung außen an dem Kraftfahrzeug notwendig, um den Öffnungswunsch zu erfassen.

Ein weiterer Vorteil der tastenden Betätigung der Klappe selbst, um diese letztlich motorisch zu öffnen, besteht darin, dass eine ggf. aufgrund von Eisregen oder dergl. vorhandene Eisschicht durchbrochen wird. Eine solche Eisschicht kann ein motorisches Öffnen der Klappe im Stand der Technik verhindern. Oder der Elektromotor und die zugehörigen mechanischen Aktuatorkomponenten müssten so dimensioniert werden, dass eine Eisschicht elektromotorisch aufgebrochen werden kann, was zu größerem Bauraum, höheren Kosten etc. führen würde. Durch die erfindungsgemäße Ausgestaltung des elektrischen Klappenantriebes kann ein relativ klein dimensionierter Elektromotor verwendet werden, und auch die mechanische Komponenten müssen nicht für derartige Extrembeanspruchungen ausgelegt werden.

Der Elektromotor treibt die Antriebswelle an, die mit dem Eingangsglied der Kupplungsanordnung verbunden ist. Das Ausgangsglied der Kupplungsanordnung ist mit der Abtriebswelle verbunden, die mit der Klappe koppelbar ist bzw. im eingebauten Zustand gekoppelt ist.

Die Kupplungsanordnung verbindet das Eingangsglied und das Ausgangsglied in einer Grundposition reibschlüssig. Mit anderen Worten wird die Abtriebswelle proportional zu der Antriebswelle angetrieben (in Abhängigkeit von der Übersetzung der Antriebsgetriebeanordnung), und zwar ohne dass ein Schlupfzustand auftritt.

Die reibschlüssige Kopplung kann vorzugsweise durch eine Federkraft eingerichtet werden.

Mit anderen Worten befindet sich die Kupplungsanordnung während Öffnungs- und Schließbewegungen in der Grundposition.

Wenn der Elektromotor nicht in Betrieb ist und sich die Klappe beispielsweise in einer Schließposition befindet, ist die Kupplungsanordnung zunächst in der Grundposition. Wenn ausgehend von diesem Zustand die Klappe betätigt wird, beispielsweise durch ein kurzes Andrücken, löst sich die Kupplungsanordnung aus der Grundposition und kommt in einen Schlupf- bzw. Rutschzustand, bei dem sich das Eingangsglied und das Ausgangsglied relativ zueinander bewegen. Diese Relativbewegung lässt sich auf vergleichsweise einfache Weise von der Sensoranordnung erfassen. Der Zustand der Kupplungsanordnung, bei dem das Eingangsglied und das Ausgangsglied aufgrund der Klappenbetätigung gegeneinander versetzt sind, kann vorliegend auch als Erfassungsposition bezeichnet werden.

Sobald die Betätigungskraft aufgehoben wird, die Bedienperson also die Klappe nicht mehr andrückt, gelangt die Kupplungsanordnung aus der Erfassungsposition wieder in die Grundposition, und zwar vorzugsweise durch die oben genannte Federkraft.

Dabei versteht sich, dass der Klappenantrieb bevorzugt so ausgebildet ist, dass das Eingangsglied in der Schließstellung und/oder der Offenstellung ausgehend von der Grundposition der Kupplungsanordnung im Wesentlichen unbeweglich bleibt bzw. gehalten ist. Eine Betätigung der Klappe führt dann in der Regel zwangsläufig zu einer Bewegung des Ausgangsgliedes relativ zu dem gehaltenen Eingangsglied, so dass ausgehend von der Grundposition der Schlupf auftritt und folglich die Erfassungsposition eingerichtet wird.

Das Halten des Eingangsgliedes kann auf verschiedene Art und Weise erfolgen. Vorzugsweise erfolgt dies dadurch, dass die Antriebsgetriebeanordnung selbsthemmend ausgebildet ist. Dies bedeutet, dass sich die Antriebsgetriebeanordnung über die Antriebswelle antreiben lässt, jedoch nicht über die Abtriebswelle antreiben lässt. Die Selbsthemmung kann auf verschiedene Art und Weise erreicht werden, beispielsweise durch sehr hohe Übersetzungen und/oder unter Verwendung eines Schneckengetriebes.

Der elektrische Klappenantrieb ist dazu in der Lage, eine Betätigung der Klappe zu erfassen, wenn diese sich in der Schließstellung befindet. In gleicher Weise ist der elektrische Klappenantrieb alternativ oder zusätzlich hierzu in der Lage, eine Betätigung der Klappe zu erfassen, wenn diese sich in der Offenstellung befindet. Mit anderen Worten kann eine kleine Andruckbewegung der Klappe ausgehend von der Offenstellung dazu führen, dass wiederum die Erfassungsposition in der Kupplungsanordnung eingerichtet wird, wodurch der Wunsch erfasst wird, die Klappe wieder zu schließen.

Die Übersetzung der Antriebsgetriebeanordnung kann 1:1 betragen, ist jedoch vorzugsweise so gewählt, dass eine relativ hohe Übersetzung zwischen der Antriebswelle und der Abtriebswelle eingerichtet ist. Hierdurch ist es beispielsweise möglich, einen kostengünstigen Elektromotor zu verwenden, beispielsweise einen Gleichstrommotor, der eine Betriebsdrehzahl von größer 4000 Umdrehungen pro Minute hat und ein Betriebsdrehmoment von kleiner 150 mNm.

Die Drehzahl der Abtriebswelle kann beispielsweise bei Öffnungs- bzw. Schließbewegungen im Bereich von 5 bis 50 Umdrehungen pro Minute liegen. Das dabei aufgebrachte Drehmoment kann beispielsweise in einem Bereich von 0,25 bis 10 Nm liegen.

Die Antriebsgetriebeanordnung ist vorzugsweise eine mehrstufige Stirnrad-Getriebeanordnung, die vorzugsweise zudem ein Schneckengetriebe aufweist, bei dem die Antriebswelle einen Schneckenwellenabschnitt aufweist und ein Zahnrad der Antriebsgetriebeanordnung als Schneckenrad ausgebildet ist, das mit der Schneckenwelle in Eingriff steht.

Unter einer Verbindung wird vorliegend verstanden, dass die damit verbundenen Elemente zwangsweise gekoppelt sind und sich insbesondere mit einer proportionalen Drehzahl drehen. Unter einer drehfesten Verbindung wird vorliegend verstanden, dass Elemente starr miteinander verbunden sind.

Der Elektromotor, die Antriebsgetriebeanordnung, die Kupplungsanordnung und die Sensoranordnung sind vorzugsweise in einem Klappenantriebs-Gehäuse aufgenommen. Bei der Klappenanordnung ist das Klappenantriebs-Gehäuse vorzugsweise hinter einer Spritzwand vorgesehen, an der eine Ladebuchse oder ein Tankstutzen vorstehtn und die in der Regel eine gewisse Abdichtung gegenüber dem Fahrzeuginneren realisiert.

Die Relativbewegung des Eingangsgliedes und des Ausgangsgliedes beim Übergang von der Grundposition in die Erfassungsposition kann ein relativer Drehversatz und/oder ein relativer Axialversatz sein. Die Sensoranordnung kann dazu ausgelegt sein, einen relativen Drehversatz und/oder einen relativen Axialversatz zwischen dem Eingangsglied und dem Ausgangsglied zu erfassen. Vorzugsweise ist hierzu eine Hall-Sensoranordnung vorgesehen. Ein Hall-Sensor ist dabei vorzugsweise gehäusefest vorgesehen. Wenigstens ein Permanentmagnet ist vorzugsweise an einem von dem Eingangsglied oder dem Ausgangsglied festgelegt.

Vorzugsweise wird ein relativer Axialversatz zwischen dem Eingangsglied und dem Ausgangsglied erfasst, der beispielsweise in einem Bereich von 0,2 bis 2 mm von der Grundposition bis zu der Erfassungsposition liegen kann, der beispielsweise einen Drehversatz von 1° bis 4° entsprechen kann.

Vorzugsweise ist die Sensoranordnung ferner dazu eingerichtet, nicht nur die Betätigung der Klappe zu erfassen, sondern auch dazu, die Position/Stellung des Antriebs und/oder die Position/Stellung der Klappe über wenigstens einen Abschnitt des Bewegungsbereiches zu erfassen, vorzugsweise über den gesamten Bewegungsbereich. Hierbei kann bspw. ein Hall-Sensor den Umfangsweg von Eingangsglied und/oder Ausgangsglied erfassen.

Die Abtriebswelle kann unmittelbar mit einer Klappe koppelbar sein, also beispielsweise drehfest damit verbunden sein. Zwischen der Abtriebswelle und der Klappe kann jedoch auch ein Klappengetriebe angeordnet sein. Hierbei kann es sich beispielsweise um eine Mehrgelenkanordnung handeln oder auch um ein weiteres Stirnradgetriebe oder dergleichen.

Die Aufgabe wird somit vollkommen gelöst.

Von besonderem Vorteil ist es, wenn die Antriebsgetriebeanordnung zwischen der Antriebswelle und dem Eingangsglied angeordnet ist, wobei die Antriebsgetriebeanordnung vorzugsweise ein selbsthemmendes Schneckengetriebe aufweist.

Dabei ist eine Abtriebswellen-Achse vorzugsweise parallel zu Achsen von Zahnrädern der Antriebsgetriebeanordnung angeordnet.

Gemäß einer weiteren bevorzugten Ausführungsform sind das Eingangsglied und das Ausgangsglied so ausgebildet, dass das Eingangsglied und das Ausgangsglied bei einer Relativverdrehung axial zueinander versetzt werden.

Dies erfolgt in der Regel dadurch, dass zwischen dem Eingangsglied und dem Ausgangsglied eine Kontur mit geneigten Abschnitten enthalten ist, so dass eine Relativverdrehung zwangsläufig zu einem relativen Axialversatz führt.

Vorzugsweise ist die Sensoranordnung dazu ausgebildet, einen relativen Axialversatz zwischen dem Eingangsglied und dem Ausgangsglied zu erfassen. Alternativ oder akkumulativ hierzu kann die Sensoranordnung auch dazu ausgebildet sein, einen relativen Drehversatz zwischen dem Eingangsglied und dem Ausgangsglied zu erfassen.

Gemäß einer weiteren insgesamt bevorzugten Ausführungsform ist die Kupplungsanordnung als zweistufige Rutschkupplung ausgebildet, wobei das Eingangsglied und das Ausgangsglied bei Aufbringen eines ersten Drehmomentes auf das Ausgangsglied um einen begrenzten ersten Schlupfbetrag relativ zueinander versetzbar sind und bei Aufbringen eines zweiten Drehmomentes auf das Ausgangsglied um einen zweiten Schlupfbetrag relativ zueinander versetzbar sind, der größer als der erste Schlupfbetrag, so dass Fehlbedienungsbewegungen der Klappe aufgenommen werden können.

Der Grundgedanke dieser Ausführungsform lässt sich wie folgt erläutern. Wenn ein erstes Drehmoment auf das Ausgangsglied aufgebracht wird (und zwar bspw. durch Aufbringen einer Betätigungsbewegung auf die Klappe), dann reicht dieses erste Drehmoment aus, um den Reibschluss der Kupplungsanordnung zu lösen, so dass diese in den Schlupfzustand gelangt und damit in eine Erfassungsposition. Die Erfassungsposition kann dann von der Sensoranordnung erfasst werden, so dass dann eine Bewegung der Klappe mittels des Elektromotors eingeleitet werden kann.

Die Betätigungsbewegungen auf die Klappe nach der Art von Tastbewegungen haben in der Regel einen Bewegungsumfang von einigen Millimetern bis hin zu maximal etwa 2 cm, insbesondere maximal 1,5 cm.

Wenn andererseits auf die Klappe, beispielsweise ausgehend von der Offenstellung, eine Betätigungskraft ausgeübt wird, die so groß ist, dass die Klappe mit "Gewalt" Richtung Schließstellung betätigt wird, wird auf das Ausgangsglied das zweite Drehmoment ausgeübt, das größer ist als das erste Drehmoment.

Hierdurch können das Eingangsglied und das Ausgangsglied um einen zweiten Schlupfbetrag relativ zueinander versetzt werden, der größer ist als der erste Schlupfbetrag, so dass derartige Fehlbedienungsbewegungen der Klappe aufgenommen bzw. kompensiert werden können.

Eine erste Stufe der Rutschkupplung ist folglich ein Rutschen bzw. ein Schlupf der Kupplungsanordnung in einem begrenzten Umfang, der gewünscht ist und der dazu dient, eine Betätigungsbewegung der Klappe zu erfassen.

Die zweite Stufe der Rutschkupplung ist hingegen nach der Art einer klassischen Rutschkupplung ausgebildet, bei der sich das Eingangsglied und das Ausgangsglied relativ frei zueinander bewegen lassen, um die Fehlbedienungen kompensieren bzw. aufnehmen zu können. Andererseits kann die Funktion der klassischen Rutschkupplung bspw. auch für eine Notentriegelung genutzt werden, sollte sich die Klappe durch Versagen der Bordelektronik oder aufgrund einer Batterieentladung nicht elektromotorisch öffnen lassen.

Von besonderem Vorzug ist es dabei, wenn der erste Schlupfbetrag einen Drehversatz zwischen dem Eingangsglied und dem Ausgangsglied kleiner gleich 45° entspricht, insbesondere kleiner 20° und vorzugsweise kleiner als 10°.

Alternativ oder akkumulativ hierzu entspricht der zweite Schlupfbetrag für die zweite Stufe der Rutschkupplung einem zweiten Drehversatz größer als 30°, insbesondere größer als 90° und vorzugsweise größer gleich 360°.

Mit anderen Worten können das Eingangsglied und das Ausgangsglied in der zweiten Stufe der Rutschkupplung über große Drehbeträge gegeneinander verdreht werden, um die Fehlbedienungen zu kompensieren.

Vorzugsweise können das Eingangsglied und das Ausgangsglied einfach oder mehrfach um 360° gegeneinander bewegt werden, um derartige Fehlbedienungen zu kompensieren.

Ferner ist es insgesamt vorteilhaft, wenn das Eingangsglied oder das Ausgangsglied eine in Umfangsrichtung verlaufende erste Kupplungskontur aufweist, wobei das andere Glied eine in Umfangsrichtung verlaufende zweite Kupplungskontur aufweist, die einen Konturfolger aufweist ist, wobei der Konturfolger vorzugsweise mit einer axialen Federkraft gegen die erste Kupplungskontur angedrückt ist.

Durch den Eingriff des Konturfolgers an der ersten Kupplungskontur kann zum einen der Reibschluss aufgebracht werden, um die Grundposition der Kupplungsanordnung einzurichten. Zum anderen kann die erste Kupplungskontur so ausgebildet sein, dass der Konturfolger und damit das damit verbundene Glied axial gegenüber dem anderen Glied versetzt wird, wenn eine Relativverdrehung erfolgt. Dies erfolgt insbesondere, wenn aus der Grundposition ein Übergang in die Erfassungsposition durchgeführt wird.

Die axiale Federkraft kann beispielsweise mittels einer Tellerfeder, einer Ringfederoder mittels einer Mehrzahl von Einzelfedern eingerichtet werden.

Besonders bevorzugt ist es hierbei, wenn die erste Kupplungskontur eine Konturbasis aufweist, in die der Kupplungsfolger in der Grundposition angedrückt ist, und einen ersten Neigungsabschnitt aufweist, der gegenüber der Umfangsrichtung um einen ersten Neigungswinkel im Bereich von 10° bis 65° geneigt ist.

Die Konturbasis kann beispielsweise eine sich in axialer Richtung erstreckende Vertiefung sein, in die der Kupplungsfolger eingreift. Ausgehend von der Konturbasis erstreckt sich der erste Neigungsabschnitt. Der erste Neigungswinkel ist in Verbindung mit der axialen Federkraft und Reibparametern der Kupplungskontur und des Kupplungsfolgers so aufeinander abgestimmt, dass der Reibschluss der Kupplungsanordnung gelöst wird, wenn die Klappe tastend betätigt wird.

Vorzugsweise liegt der erste Neigungswinkel in einem Bereich von 30° bis 60°, insbesondere von 40° bis 50°.

Ferner ist es vorteilhaft, wenn die erste Kupplungskontur einen zweiten Neigungsabschnitt aufweist, der gegenüber der Umfangsrichtung um einen zweiten Neigungswinkel geneigt ist, der kleiner ist als 90° und größer ist als der erste Neigungswinkel.

Der zweite Neigungsabschnitt schließt sich in Umfangsrichtung an den ersten Neigungsabschnitt an. Mit anderen Worten ist der erste Neigungsabschnitt zwischen der Konturbasis und dem zweiten Neigungsabschnitt angeordnet.

Der zweite Neigungswinkel ist größer als der erste Neigungswinkel. Demzufolge ist eine größere Kraft bzw. ein größeres Drehmoment auf das Ausgangsglied aufzubringen, um den Konturfolger in den Bereich des zweiten Neigungsabschnittes zu zwingen.

Mit anderen Worten erfährt der Benutzer beim Betätigen der Klappe zunächst einen gewissen leichten Widerstand (entsprechend dem ersten Neigungsabschnitt), der jedoch gewünscht ist, und der dem Benutzer eine taktile Rückmeldung darüber gibt, dass er die Klappe tatsächlich betätigt. Wenn der Benutzer die Klappe jedoch über das übliche Maß hinaus andrückt, beispielsweise aus der Offenstellung in Richtung der Schließstellung mit "roher Gewalt", gelangt der Konturfolger in dem Bereich des zweiten Neigungsabschnittes. Mit anderen Worten erfährt der Benutzer eine hohe Widerstandskraft, die ihm mittelbar anzeigt, dass die Art seiner Betätigung fehlerhaft ist. Falls diese Kraftwirkung dennoch fortgesetzt wird, bewegt sich der Konturfolger weiter entlang des zweiten Neigungsabschnittes.

Vorzugsweise weist die erste Kupplungskontur anschließend an den zweiten Neigungsabschnitt einen Geradabschnitt auf, der parallel zu der Umfangsrichtung ausgerichtet ist.

Beim Ausüben der großen Fehlbedienungskraft gelangt der Kupplungsfolger folglich ausgehend von dem zweiten Neigungsabschnitt zu dem Geradabschnitt, bei dem eine Verdrehung des Eingangsgliedes und des Ausgangsgliedes bei relativ geringem Kraftaufwand möglich ist.

Hierdurch können für den Fall einer Fehlbedienung oder einer Notentriegelung mechanische Beschädigungen des Klappenantriebs verhindert werden
Die beschriebene Kupplungskontur mit dem ersten Neigungsabschnitt, dem zweiten Neigungsabschnitt und dem Geradabschnitt ist vorzugsweise in Umfangsrichtung spiegelsymmetrisch, so dass die Betätigungsbewegungen in beide Richtungen erfolgen könne.

Ferner ist eine derartige spiegelsymmetrische erste Kupplungskontur vorzugsweise in Umfangsrichtung mehrfach vorgesehen, wobei die ersten Kupplungskonturen jeweils über die Geradabschnitte miteinander verbunden sind.

Bei der zweiten Stufe der Rutschkupplung erfolgt folglich eine Relativbewegung des ersten Eingangsgliedes und des zweiten Eingangsgliedes derart, dass der Kupplungsfolger (oder die Kupplungsfolger, wenn jeder ersten Kupplungskontur ein eigener Kupplungsfolger zugeordnet ist) ausgehend von der Konturbasis über die zwei Neigungsabschnitte zunächst zu dem Geradabschnitt versetzt wird. Von dort gelangt er in den in Umfangsrichtung folgenden ersten Konturabschnitt und folglich wieder über einen zweiten Neigungsabschnitt, einen ersten Neigungsabschnitt in dessen Konturbasis und von dort wieder über einen ersten Neigungsabschnitt, einen zweiten Neigungsabschnitt hin zu einem weiteren Geradabschnitt, usw. Hierdurch ergibt sich vorzugsweise eine Art Rutschkupplungsgeräusch, bei dem jeder Eingriff eines Kupplungsfolgers in eine weitere erste Kupplungskontur einem Klackgeräusch entspricht.

Die Person, die die Fehlbedienungen ausführt, bekommt also auch eine Art akustische Rückmeldung, dass diese Art der Bewegung offensichtlich nicht richtig ist. Andererseits führt die Bewegung nicht dazu, dass an dem elektrischen Klappenantrieb irgendwelche Beschädigungen hervorgerufen werden.

Die zweite Stufe der Rutschkupplung ist folglich eine Art Sicherheitsstufe.

Gemäß einer weiteren bevorzugten Ausführungsform ist das Eingangsglied als Ringelement ausgebildet, das axial verschieblich an dem Ausgangsglied gelagert ist, wobei an dem Eingangsglied vorzugsweise wenigstens ein Sensorelement der Sensoranordnung festgelegt ist.

Das Ausgangsglied weist vorzugsweise radial innen eine Axialverzahnung auf, in die eine Welle eines Klappengetriebes oder dergleichen eingesteckt werden kann. Das Eingangselement ist als Ringelement vorzugsweise im Bereich eines Außenumfangs des Ausgangsglieds gelagert. Das Sensorelement der Sensoranordnung ist vorzugsweise ein Permanentmagnet. Vorzugsweise ist eine Mehrzahl von derartigen Sensorelementen über den Umfang des Eingangsglieds verteilt festgelegt.

In einer weiteren bevorzugten Ausführungsform können die Sensorelemente (bspw. Magnete) so angeordnet werden, dass ein Hall-Sensor (oder dergl.) einen Umfangsweg des Eingangsgliedes (oder ggf. des Ausgangsgliedes) erfassn kann.

Ferner ist es vorteilhaft, wenn zwischen dem Ausgangsglied und dem Eingangsglied eine Federanordnung angeordnet ist, mittels der der Konturfolger gegen die erste Kupplungskontur angedrückt ist.

Die Federanordnung kann beispielsweise eine Ringfeder sein, nach der Art einer ringförmigen Tellerfeder.

Ferner ist es vorteilhaft, wenn der elektrische Klappenantrieb ein Gehäuse aufweist, in dem der Elektromotor angeordnet ist, wobei die Antriebswelle und die Abtriebswelle vorzugsweise windschief zueinander ausgerichtet sind.

Durch die windschiefe Lage von Abtriebswelle und Antriebswelle kann konstruktiv günstig ein Schneckengetriebe integriert werden.

Die Abtriebswelle ist vorzugsweise axial fest innerhalb des Gehäuses gelagert.

Von besonderem Vorzug ist es, wenn die Abtriebswelle drehbar in Bezug auf das Gehäuse gelagert ist, wobei das Gehäuse eine Öffnung aufweist, über die ein Klappengetriebe mit der Abtriebswelle verbindbar ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einer Ladeklappe;
- Fig. 2: eine schematische Schnittansicht einer Ladeklappenanordnung;
- Fig. 3: eine schematische Darstellung eines elektrischen Klappenantriebs;
- Fig. 4: eine schematische Darstellung einer Kupplungsanordnung mit einer ersten Kupplungskontur und einem daran angreifenden Kupplungsfolger;
- Fig. 5: eine Funktions-Darstellung eines Axialversatzes bzw. eines Drehversatzes über einem Drehmoment, das auf ein Ausgangsglied der Kupplungsanordnung der Fig. 4 ausgeübt wird;
- Fig. 6: eine Darstellung einer weiteren Ausführungsform eines elektrischen Klappenantriebs;
- Fig. 7: eine Darstellung des Klappenantriebs der Fig. 6 ohne ein diesen umschließendes Gehäuse;
- Fig. 8: eine Kupplungsanordnung des Klappenantriebs der Fig. 6 und 7 in einer Grundposition;
- Fig. 9: die Kupplungsanordnung der Fig. 8 in einer Erfassungsposition;
- Fig. 10: die Kupplungsanordnung der Fig. 8 in einer Rutschposition; und
- Fig. 11: eine schematische Darstellung der Kupplungsanordnung des Klappenantriebs der Fig. 6 bis 10.

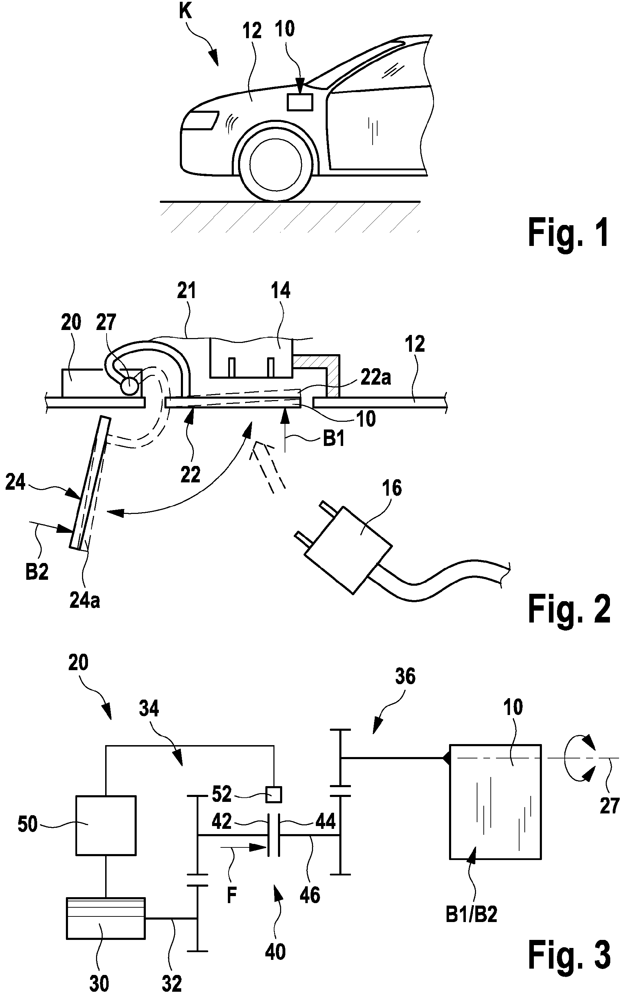

In Fig. 1 ist in schematischer Form ein Kraftfahrzeug K dargestellt, das eine Karosserie 12 hat, an der eine Ladeklappe 10 angeordnet ist. Die Ladeklappe 10 dient zum Zugang zu einer Ladebuchse, um eine Batterie des Kraftfahrzeugs K zu laden. Anstelle der Ladeklappe 10 kann es sich auch um eine Tankklappe handeln. Generell betrifft die vorliegende Erfindung auch andere Arten von Klappen, wie beispielsweise Heckklappen eines Kraftfahrzeugs, Brandschutzklappen in Gebäuden, Media-Zugangsklappen in Innenräumen von Kraftfahrzeugen, um einige Beispiele zu nennen.

Fig. 2 ist eine schematische Querschnittsansicht entlang im Wesentlichen horizontaler Richtung durch einen Teil der Karosserie 12 und der Ladeklappe 10.

Es ist zu erkennen, dass hinter der Ladeklappe 10 eine Ladebuchse 14 angeordnet ist, in die ein Ladestecker 16 einsteckbar ist. Ferner ist ein elektrischer Klappenantrieb 20 vorgesehen, mittels dessen die Klappe 10 aus der gezeigten Schließstellung 22 in eine Offenstellung 24 versetzbar ist und umgekehrt.

Der Klappenantrieb 20 ist hinter einer Spritzwand 21 vorgesehen, die den Bereich hinter der Ladeklappe 10 abdichtet und gegenüber der die Ladebuchse 14 vorragt. Ferner ist in der Spritzwand eine Öffnung für eine Klappenmechanik, ein Klappengetriebe oder dergleichen vorgesehen.

Eine Bewegung der Klappe 10 aus der Schließstellung 22 in die Offenstellung 24 kann eingeleitet werden durch eine Betätigungsbewegung nach der Art einer tastenden Bewegung B1 auf die Ladeklappe 10 selbst. Hierdurch wird die Ladeklappe 10 ausgehend von der gezeigten Schließstellung 22 in eine erste Taststellung 22a gedrückt. Der Bewegungshub kann beispielsweise im Bereich von 0,5 bis 20 mm liegen, liegt vorzugsweise jedoch im Bereich von etwa 1 mm bis 15 mm.

Diese tastende Betätigung B1 wird im Inneren des Klappenantriebs 20 erfasst, so dass dann ausgehend hiervon eine Öffnungsbewegung eingeleitet werden kann.

Andererseits kann ausgehend von der Offenstellung 24 ebenfalls eine zweite tastende Bewegung B2 auf die Klappe ausgeübt werden, mit der die Klappe 10 aus der Offenstellung 24 in eine zweite Taststellung 24a gelangt, wobei der Bewegungsumfang ähnlich ist wie in Verbindung mit der ersten Taststellung 22a. Die zweite tastende Bewegung B2 kann wiederum im Inneren des Klappenantriebs erfasst werden, um ausgehend hiervon eine Schließbewegung von der Offenstellung 24 in die Schließstellung 22 einzuleiten.

In Fig. 2 ist ferner eine Schwenkachse 27 der Klappe 10 schematisch dargestellt. Die Schwenkachse 27 kann beispielsweise etwa vertikal verlaufen, wie dargestellt, kann jedoch auch horizontal verlaufen.

In Fig. 3 ist in schematischer Form eine Ausführungsform eines elektrischen Klappenantriebs 20 nach der Art eines Blockschaltbildes mit einer vereinfachten Getriebedarstellung gezeigt.

Der Klappenantrieb 20 weist einen Elektromotor 30 auf. Der Elektromotor 30 kann beispielsweise ein 12 Volt-Gleichstrom-Bürstenmotor sein, der eine Betriebsdrehzahl im Bereich von 5000 bis 10.000 Umdrehungen pro Minute hat und ein Betriebsdrehmoment im Bereich von 2 mNm bis 40 mNm.

Der Elektromotor 30 weist eine Motorwelle in Form einer Antriebswelle 32 auf.

Die Antriebswelle 32 ist über eine schematisch dargestellte Antriebsgetriebeanordnung 34 mit einem Eingangsglied 42 einer Kupplungsanordnung 40 verbunden. Ein Ausgangsglied 44 der Kupplungsanordnung 40 ist mit einer Abtriebswelle 46 verbunden, die wiederum über ein Klappengetriebe 36 mit der Klappe 10 gekoppelt ist. Die Klappe 10 ist um die Schwenkachse 27 verschwenkbar.

Es versteht sich, dass eine Verschwenkbewegung um eine einzelne Achse nur ein Beispiel ist. Es versteht sich, dass das Klappengetriebe 36 auch eine Mehrgelenkanordnung sein kann, bei der die Klappe so verschwenkt wird, dass die Schwenkachse sich im Raum mitbewegt.

Wie es in Fig. 3 dargestellt ist, können auf die Klappe 10 Betätigungsbewegungen B1/B2 ausgeübt werden, die über das Klappengetriebe 36 auf die Abtriebswelle 46 wirken und folglich auf das Ausgangsglied 44.

Die Kupplungsanordnung 40 ist eine reibschlüssige Kupplungsanordnung, bei der das Eingangsglied 42 und das Ausgangsglied 44 über eine Federkraft F aneinandergedrückt werden. Die Federkraft F und weitere Parameter der Kupplungsanordnung (wie Reibparameter, Übersetzungen etc.) sind so gewählt, dass Öffnungsbewegungen und Schließbewegungen der Klappe in dem reibschlüssigen Zustand der Kupplungsanordnung 40 erfolgen, bei dem es sich folglich um eine Grundposition handelt.

Der Klappenantrieb 20 beinhaltet ferner eine Steueranordnung 50, mittels der der Elektromotor 30 angesteuert wird. Die Steueranordnung 50 ist ferner mit einer Sensoranordnung 52 verbunden, die der Kupplungsanordnung 40 zugeordnet ist.

Die Sensoranordnung 52 ist vorzugsweise dazu ausgebildet, einen Schlupf der Kupplungsanordnung zu erfassen, der durch eine betätigende Bewegung B1 oder B2 der Klappe 10 verursacht wird. Folglich wird die Sensoranordnung 52 dazu verwendet, um zu erfassen, ob eine Bedienperson die Klappe öffnen oder schließen möchte, was sie durch eine tastende Betätigung B1 bzw. B2 auf die Klappe 10 vermittelt.

Die Antriebsgetriebeanordnung 34 ist vorzugsweise selbsthemmend ausgebildet. Eine tastende Bewegung B1/B2 der Klappe 10 und folglich des Ausgangsgliedes 44 führt folglich zu einem Schlupf, da das Eingangsglied 42 über die selbsthemmende Antriebsgetriebeanordnung 34 im Wesentlichen unbeweglich gehalten wird.

Der Elektromotor 30, die Steueranordnung 50, die Antriebsgetriebeanordnung 34, die Kupplungsanordnung 40 (zumindest das Eingangsglied 42) und die Sensoranordnung 50 sind vorzugsweise in einem Bereich hinter der Spritzwand 21 angeordnet und sind vorzugsweise in einem gemeinsamen Gehäuse aufgenommen, was in Fig. 3 jedoch nicht dargestellt ist.

Generell könnte die schlupfende Bewegung der Kupplungsanordnung 40 dadurch erfasst werden, dass der relative Drehversatz zwischen dem Eingangsglied 42 und dem Ausgangsglied 44 mittels der Sensoranordnung 52 erfasst wird.

Vorzugsweise stehen das Eingangsglied 42 und das Ausgangsglied 44 jedoch über Konturen miteinander in Eingriff, die dazu führen, dass bei einer Relativverdrehung von Eingangsglied 42 und Ausgangsglied 44 sich auch ein relativer Axialversatz zwischen dem Eingangsglied 42 und dem Ausgangsglied 44 ergibt.

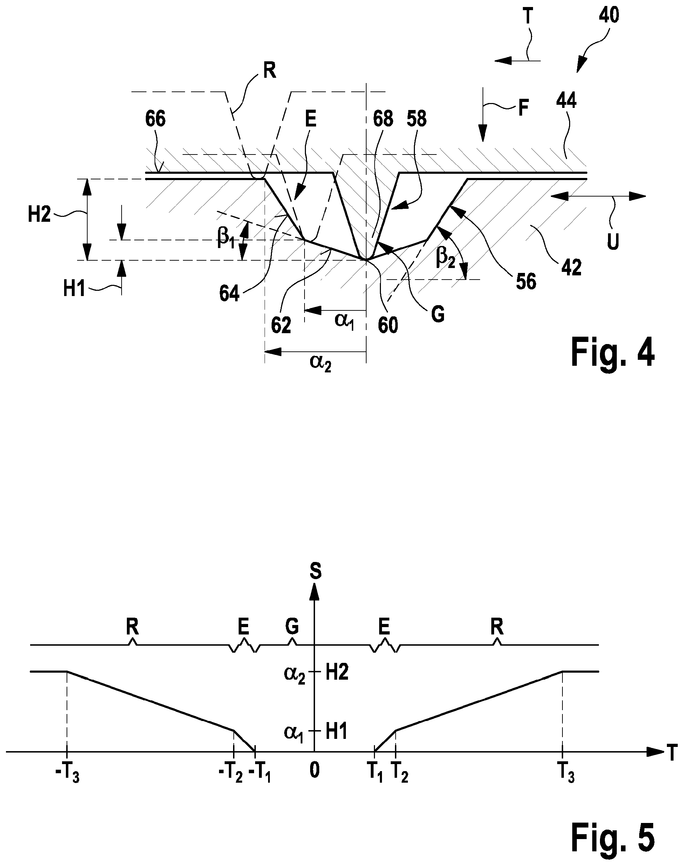

Ein Beispiel einer Kupplungsanordnung 40 mit derartigen Konturen ist in Fig. 4 dargestellt.

Das Eingangsglied 42 ist als Drehglied ausgebildet, das generell in einer Umfangsrichtung U drehbar ist. Gleiches gilt für das Ausgangsglied 44. Das Eingangsglied 42 weist eine erste Kupplungskontur 56 auf. Das Ausgangsglied 44 weist eine zweite Kupplungskontur 58 auf.

Die erste Kupplungskontur 56 beinhaltet eine Konturbasis 60. Ferner weist die erste Kupplungskontur 56 einen ersten Neigungsabschnitt 62 auf, der sich von der Konturbasis 60 erstreckt. Die erste Kupplungskontur 56 weist ferner einen zweiten Neigungsabschnitt 64 auf, der sich ausgehend von dem ersten Neigungsabschnitt 62 erstreckt. Schließlich weist die erste Kupplungskontur 56 einen Geradabschnitt 66 auf, der sich an den zweiten Neigungsabschnitt 64 anschließt und in Umfangsrichtung U ausgerichtet ist.

Wie es in Fig. 4 gezeigt ist, ist die erste Kupplungskontur 56 spiegelsymmetrisch in Bezug auf eine Umfangsposition entsprechend der Konturbasis 60 ausgebildet, weist also zwei erste Neigungsabschnitte 62 und zwei zweite Neigungsabschnitte 64 auf.

Die zweite Kupplungskontur 58 weist einen Konturfolger 68 auf.

Der Konturfolger 68 greift in der Darstellung der Fig. 4 an der Konturbasis 60 der ersten Kupplungskontur 56 an.

Der Konturfolger 68 erstreckt sich axial ausgehend von einem sich in Umfangsrichtung U erstreckenden nicht näher bezeichneten Geradabschnitt der zweiten Kupplungskontur 58.

Der erste Neigungsabschnitt 62 ist unter einem ersten Neigungswinkel β1 in Bezug auf die Umfangsrichtung U geneigt. Der zweite Neigungsabschnitt 64 ist unter einem zweiten Neigungswinkel β2 in Bezug auf die Umfangsrichtung U geneigt. Der zweite Neigungswinkel β2 ist größer als der erste Neigungswinkel β1.

Das Ausgangsglied 44 ist mittels einer axialen Federkraft F gegen das Eingangsglied 42 angedrückt (oder umgekehrt). Der Konturfolger 68 sitzt folglich in der Konturbasis 60, derart, dass in der oben beschriebenen Grundposition G, die in Fig. 4 in durchgezogenen Linien dargestellt ist, das Eingangsglied 42 und das Ausgangsglied 44 in Umfangsrichtung U reibschlüssig gekoppelt sind.

Sofern auf das Ausgangsglied 44 ein Drehmoment T ausgeübt wird, das in Umfangsrichtung U gerichtet ist, bleibt die Kupplungsanordnung 40 in der Grundposition G, solange das Drehmoment T nicht eine erste Drehmomentschwelle T₁ überschreitet, wie sie in Fig. 5 dargestellt ist.

Wenn das Drehmoment T die erste Drehmomentschwelle T₁ überschreitet, löst sich der Reibschluss der Grundposition G und der Kupplungsfolger 68 gelangt in den Bereich des ersten Neigungsabschnittes 62. Hierdurch ergibt sich ein Schlupf der Kupplungsanordnung 40, und zwar in Form eines ersten Schlupfbetrages um einen ersten Drehversatz α1 (der der Umfangslänge des ersten Neigungsabschnittes 62 entspricht). Dadurch, dass der Kupplungsfolger 68 der Neigung des ersten Neigungsabschnittes 68 folgt, ergibt sich zudem ein relativer Axialversatz zwischen dem Eingangsglied 42 und dem Ausgangsglied 44, was in Fig. 4 mit H₁ gezeigt ist.

Dieser Bereich des Schlupfes innerhalb von α1 bzw. H₁ wird auch als Erfassungsposition E bezeichnet, wie es auch in Fig. 4 und 5 dargestellt ist.

Sofern das Drehmoment T über einen zweiten Schwellenwert T₂ hinausgeht, der größer ist als der erste Schwellenwert, gelangt der Konturfolger 68 in den Bereich des zweiten Neigungsabschnittes 64. Sofern dieses Drehmoment T größer gleich T₂ auf das Ausgangsglied 44 ausgeübt wird, gelangt der Konturfolger 68 schließlich in den Bereich des Geradabschnittes 66. Auch dies ist in Fig. 5 schematisch dargestellt.

Sofern der Kupplungsfolger 68 sich im Bereich des zweiten Neigungsabschnittes 64 befindet oder im Bereich des Geradabschnittes 66, wird folglich eine sog. Rutschposition R eingerichtet, wie sie in den Fig. 4 und 5 dargestellt ist.

Die Grundposition ist in der Regel eine feste Umfangsposition. Die Erfassungsposition E und die Rutschposition R sind jedoch jeweilige Umfangsrichtungsbereiche.

Die Kupplungsanordnung 40 ist folglich als zweistufige Rutschkupplung ausgebildet.

Sofern mittels einer Sensoranordnung 52 erfasst wird, dass sich der Kupplungsfolger 68 in dem ersten Neigungsbereich 62 befindet (beispielsweise bei Erfassen eines relativen Axialversatzes von wenigstens 0,5 H₁ oder dergleichen), wird eine elektromotorische Bewegung der Klappe 10 eingeleitet.

Wenn sich der Kupplungsfolger 68 jedoch in der Rutschposition R befindet, erfolgt dies aufgrund einer deutlich höheren Kraft, die auf die Klappe 10 ausgeübt wird und die zu einem entsprechenden Drehmoment T auf das Ausgangsglied 44 führt, das größer ist als T₂. Eine derartige Kraftausübung ist in der Regel eine Fehlbedienung. Demzufolge führt diese Fehlbedienung bei der Kupplungsanordnung 40 zu einem Durchrutschen bis hinein in den Bereich, wo der Kupplungsfolger 68 im Bereich des Geradabschnittes 66 ist. In diesem Bereich ist eine Relativverdrehung bereits bei sehr geringem Drehmoment möglich.

Jeweilige Anordnungen aus einer ersten Kupplungskontur 56 und einer zweiten Kupplungskontur 58 können über den Umfang des Eingangsgliedes 42 und des Ausgangsgliedes 44 verteilt angeordnet sein, beispielsweise drei, vier, fünf, sechs, sieben oder acht derartiger Kupplungskontur-Paarungen.

Ein Kupplungsfolger 68 würde bei einer derartigen Fehlbedienung folglich aus einer zugeordneten ersten Kupplungskontur 56 herausrutschen, über den Geradabschnitt 66 jedoch in die in Umfangsrichtung nächste erste Kupplungskontur einfallen, von dort wieder in gleicher Drehrichtung aus der weiteren ersten Kupplungskontur herausgedrückt werden und wieder über einen weiteren Geradabschnitt 66 hin zu der dritten ersten Kupplungskontur usw. Dies wird im Falle einer derartigen Fehlbedienung zu einem klackenden Rastgeräusch führen, so dass die Bedienperson merkt, dass eine Fehlbedienung stattfindet.

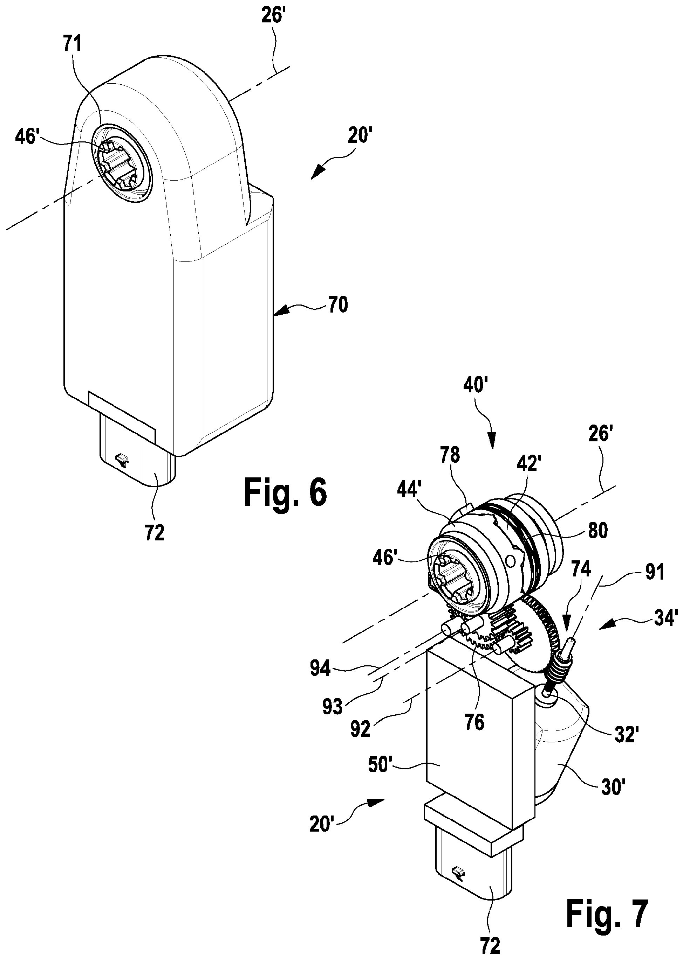

In den Fig. 6 bis 11 ist eine weitere Ausführungsform eines elektrischen Klappenantriebs gezeigt. Der elektrische Klappenantrieb 20', der in den Fig. 6 bis 11 dargestellt ist, entspricht hinsichtlich Aufbau und Funktionsweise generell dem Klappenantrieb, der in Bezug auf die Fig. 2 bis 5 beschrieben worden ist. Gleiche Elemente sind daher durch gleiche Bezugszeichen gekennzeichnet. Im Folgenden werden im Wesentlichen die Unterschiede erläutert.

Der elektrische Klappenantrieb 20' weist, wie es in Fig. 6 gezeigt ist, ein Gehäuse 70 auf, das eine Öffnung 71 aufweist, durch die hindurch eine Abtriebswelle 46' zugänglich ist. Die Abtriebswelle 46' ist beispielsweise mit einem Koppelabschnitt wie einer axialen Innenverzahnung ausgestaltet, in die hinein eine Welle oder ein anderes Glied eines Klappengetriebes 36 eingesteckt werden kann.

An dem Außenumfang des Gehäuses 70 ist ferner ein elektrischer Anschluss 72 ausgebildet, über den eine im Inneren des Gehäuses 70 angeordnete Steueranordnung 50' kontaktierbar ist.

Wie es in Fig. 7 gezeigt ist, beinhaltet die Antriebsgetriebeanordnung 34' ein selbsthemmendes Schneckengetriebe 74, das eine Schneckenwelle an der Antriebswelle 32' und ein Schneckenrad beinhaltet. Die Antriebswelle 32' ist entlang einer Motorachse a1 ausgerichtet.

Das Schneckenrad ist mit einem nicht näher bezeichneten Stirnzahnrad drehfest verbunden und gemeinsam mit diesem drehbar in Bezug auf eine erste Getriebeachse a2 angeordnet. Das Stirnrad steht in Eingriff mit einem weiteren Stirnrad eines Zahnrades, das drehbar in Bezug auf eine zweite Getriebeachse a3 gelagert ist. Das weitere Zahnrad steht in Eingriff mit einem Getriebezahnrad 76, das drehbar in Bezug auf eine dritte Getriebeachse a4 gelagert ist. Das Getriebezahnrad 76 steht in Eingriff mit einem Eingangsglied-Zahnrad 78, das an dem Eingangsglied 42 festgelet ist und das in Fig. 7 schematisch angedeutet ist.

Die Abtriebswelle 46' ist koaxial zu einer Abtriebswellen-Achse 26' ausgerichtet. Die Abtriebswellen-Achse 26' sowie die Getriebeachsen a2, a3 und a4 sind parallel zueinander ausgerichtet. Die Motorachse a1 ist windschief zu der Abtriebswellen-Achse 26' ausgerichtet.

Das Ausgangsglied 44' ist als Außenumfangsabschnitt an der Abtriebswelle 46' angeordnet und starr mit dieser verbunden. Das Eingangsglied 42' der Getriebeanordnung 40' ist als Ringelement am Außenumfang der Abtriebswelle 46' bzw. des Ausgangselementes 44' angeordnet und ist axial in Bezug auf das Ausgangsglied 44' beweglich gelagert.

Das Eingangsglied 42 ist in axialer Richtung mittels einer Tellerfeder bzw. Ring-Tellerfeder 80 gegen das Ausgangsglied 44 vorgespannt. Das Eingangsglied 42 und das Ausgangsglied 44 können jeweilige Kupplungskonturen aufweisen, wie sie oben beschrieben wurden.

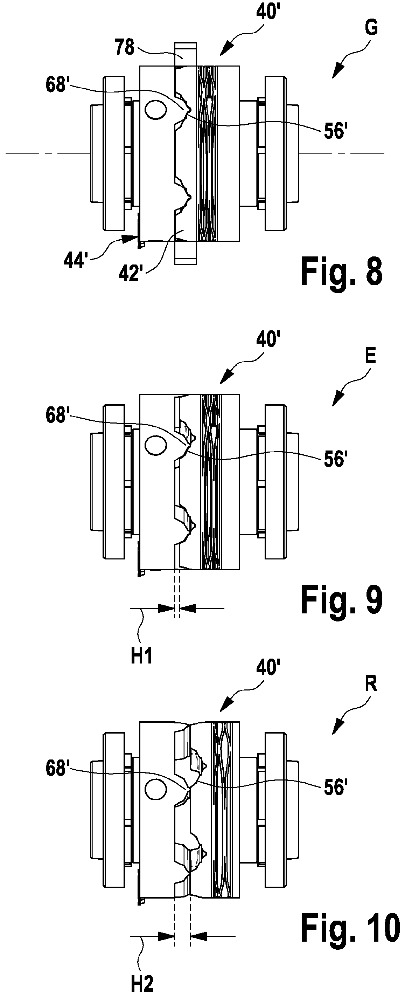

Die Kupplungsanordnung 40' des Klappenantriebs 20' der Fig. 6 und 7 ist in den Fig. 8, 9 und 10 in unterschiedlichen Positionen dargestellt.

In Fig. 8 ist die Kupplungsanordnung 40' in der Grundposition G dargestellt, in der das Eingangsglied 42' und das Ausgangsglied 44' reibschlüssig gekoppelt sind.

In Fig. 9 ist die Erfassungsposition E gezeigt, bei der sich der Kupplungsfolger 68 über den ersten Neigungsabschnitt bewegt hat.

In Fig. 10 ist die Rutschposition R gezeigt, bei der der Kupplungsfolger 68 auf dem Geradabschnitt aufliegt.

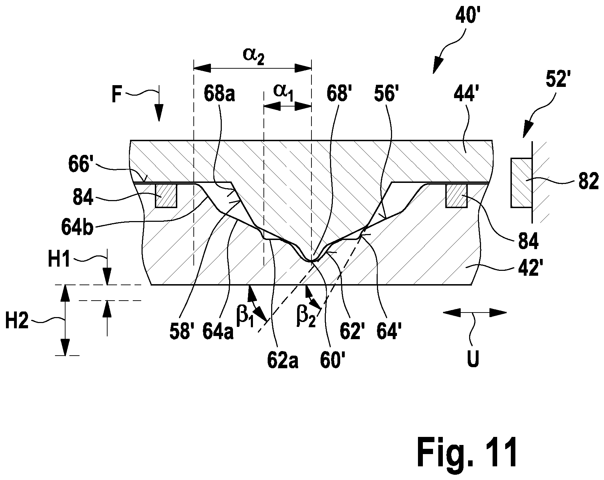

Die genauen Konturen der Kupplungsanordnung 40' sind in Fig. 11 dargestellt. Fig. 11 entspricht weitestgehend Fig. 4. Im Folgenden werden im Wesentlichen die Unterschiede erläutert.

So ist in Fig. 11 zu erkennen, dass die erste Kupplungskontur 56' in unmittelbarem Anschluss an die Konturbasis 60' den ersten Neigungsabschnitt 62' aufweist, der den ersten Neigungswinkel β₁ hat. Der erste Neigungsabschnitt 62 beinhaltet jedoch in Umfangsrichtung vor dem zweiten Neigungsabschnitt 64' einen Auslaufabschnitt 62a , bei dem der Neigungswinkel wieder deutlich kleiner ist. Demzufolge kann eine Klappenbewegung zunächst gegen einen ersten Widerstand erfolgen, der dem ersten Neigungswinkel β1 entspricht. Dann, wenn ein bestimmter Weg überwunden ist, lässt sich die Klappe dann noch ein kleines Stück sehr leicht bewegen und dies kann als eine Art Rückmeldefunktion verwendet werden, so dass der Nutzer weiß, dass er die Klappe jetzt hinreichend angedrückt hat, um eine Öffnungs- oder Schließbewegung einzuleiten.

Erst an diesem Auslaufabschnitt schließt sich der zweite Neigungsabschnitt 64 mit dem zweiten Neigungswinkel β2 an.

Auch der zweite Neigungsabschnitt 64' hat im Anschluss an jenen Abschnitt, der den zweiten Neigungswinkel β₂ hat, noch weitere Übergangsabschnitte (oder wenigstens einen Übergangsabschnitt), bei dem der Neigungswinkel β wieder etwas geringer ist.

Auch in diesem Fall ist es so, dass der Übergang von dem zweiten Neigungsabschnitt 64 hin zu dem Geradabschnitt 66 zunächst eine sehr große Kraft (entsprechend größer T₂) erfordert, die dann jedoch wieder geringer wird, bevor der Geradabschnitt 66' erreicht wird.

Diese Übergangsabschnitte sind in Fig. 11 bei 64a und 64b gezeigt.

Es ist zu erkennen, dass der Übergangsabschnitt 64a, der sich an den zweiten Neigungsabschnitt 64' anschließt, einen kleineren Neigungswinkel β als β₂ hat, der zweite Übergangsabschnitt 64b jedoch wieder einen höheren Neigungswinkel β kleiner gleich β₂ hat.

Die Form der zweiten Kupplungskontur 58' ist so, dass zwischen dem Kupplungsfolger 68' und dem Geradabschnitt der zweiten Kupplungskontur 58' ein Übergangsabschnitt 68a vorgesehen ist, dessen Neigungswinkel jenem des zweiten Übergangsabschnittes 64b entspricht, wie es in Fig. 11 zu erkennen ist.

Sofern sich der Kupplungsfolger 68 folglich in der Erfassungsposition E befindet, wie sie in Fig. 9 dargestellt ist, liegt der Übergangsabschnitt 68a an dem Übergangsabschnitt 64b an, so dass eine relativ hohe Reibung zu überwinden ist, um den Kupplungsfolger 68' schließlich in den Bereich des Geradabschnittes 66' zu verbringen.

### Bezugszeichen:

- 10: Ladeklappe
- 12: Karosserie
- 14: Ladebuchse
- 16: Ladestecker
- 20: Klappenantrieb
- 21: Spritzwand
- 22: Schließstellung
- 22a: erste Taststellung
- 24: Offenstellung
- 24a: zweite Taststellung
- 26: Abtriebswellen-Achse
- 27: Klappen-Schwenkachse
- 30: Elektromotor
- 32: Antriebswelle
- 34: Antriebsgetriebeanordnung
- 36: Klappengetriebe
- 40: Kupplungsanordnung
- 42: Eingangsglied
- 44: Ausgangsglied
- 46: Abtriebswelle
- 50: Steueranordnung
- 52: Sensoranordnung
- 56: erste Kupplungskontur
- 58: zweite Kupplungskontur
- 60: Konturbasis
- 62: erster Neigungsabschnitt (β1)
- 64: zweiter Neigungsabschnitt (β2)
- 66: Geradabschnitt
- 68: Konturfolger
- 70: Gehäuse (20)
- 71: Öffnung für 46
- 72: elektrischer Anschluss
- 74: selbsthemmendes Schneckengetriebe (34)
- 76: Getriebezahnrad
- 78: Eingangsglied-Zahnrad
- 80: Tellerfeder
- 82: Hall-Sensor (3D)
- 84: Permanentmagnet

- K: Kraftfahrzeug
- B1: erste tastende Betätigung
- B2: zweite tastende Betätigung
- F: Kraft auf 40
- G: Grundposition 40
- E: Erfassungsposition 40
- R: Rutschposition 40
- U: Tangential- bzw. Umfangsrichtung
- T: Drehmoment
- T1: erster Drehmoment-Schwellenwert
- T2: zweiter Drehmoment-Schwellenwert
- H1: erster Axialversatz (erster Schlupfbetrag)
- H2: zweiter Axialversatz (zweiter Schlupfbetrag)
- α1: erster Verdrehversatz (erster Schlupfbetrag)
- α2: zweiter Verdrehversatz (zweiter Schlupfbetrag)
- β1: erster Neigungswinkel
- β2: zweiter Neigungswinkel
- a1: Motorachse 32
- a2: erste Getriebeachse (34)
- a3: zweite Getriebeachse (34)
- a4: dritte Getriebeachse (34)

## Patentansprüche

1. Elektrischer Klappenantrieb (20), insbesondere für eine Lade- oder Tancklappe (10) eines Kraftfahrzeugs (K), mit
- einem Elektromotor (30), der eine Antriebswelle (32) aufweist,
- einer Abtriebswelle (46), die mit einer Klappe (10) koppelbar ist,
- einer Antriebsgetriebeanordnung (34), die eine Übersetzung zwischen der Antriebswelle (32) und der Abtriebswelle (46) einrichtet,
- einer Kupplungsanordnung (40), die ein mit der Antriebswelle (32) verbundenes Eingangsglied (42) und ein mit der Abtriebswelle (46) verbundenes Ausgangsglied (44) aufweist, die in einer Grundposition (G) reibschlüssig gekoppelt sind, und
- einer Sensoranordnung (52), die dazu eingerichtet ist, einen Schlupf der Kupplungsanordnung (40) zu erfassen, der durch eine betätigende Bewegung (B1, B2) der Klappe (10) verursacht wird.

2. Elektrischer Klappenantrieb nach Anspruch 1, wobei die Antriebsgetriebeanordnung (34) zwischen der Antriebswelle (32) und dem Eingangsglied (42) angeordnet ist, wobei die Antriebsgetriebeanordnung (34) vorzugsweise ein selbsthemmendes Schneckengetriebe (74) aufweist.

3. Elektrischer Klappenantrieb nach Anspruch 1 oder 2, wobei das Eingangsglied (42) und das Ausgangsglied (44) so ausgebildet sind, dass das Eingangsglied (42) und das Ausgangsglied (44) bei einer Relativverdrehung axial zueinander versetzt werden, und/oder wobei die Sensoranordnung (52) dazu ausgebildet ist, einen relativen Axialversatz (H) zwischen dem Eingangsglied (42) und dem Ausgangsglied (44) und/oder einen relativen Drehversatz (α) zwischen dem Eingangsglied (42) und dem Ausgangsglied (44) zu erfassen.

4. Elektrischer Klappenantrieb nach einem der Ansprüche 1 - 3, wobei die Kupplungsanordnung (40) als zweistufige Rutschkupplung ausgebildet ist, wobei das Eingangsglied (42) und das Ausgangsglied (44) bei Aufbringen eines ersten Drehmomentes (T1) auf das Ausgangsglied (44) um einen begrenzten ersten Schlupfbetrag (H1; α1) relativ zueinander versetzbar sind und bei Aufbringen eines zweiten Drehmomentes (T2) auf das Ausgangsglied (44) um einen zweiten Schlupfbetrag (H2; α2) relativ zueinander versetzbar sind, der größer ist als der erste Schlupfbetrag, so dass Fehlbedienungsbewegungen der Klappe (10) aufgenommen werden können.

5. Elektrischer Klappenantrieb nach Anspruch 4, wobei
- der erste Schlupfbetrag einem ersten Drehversatz (α1) kleiner gleich 45° entspricht, insbesondere kleiner 20° und vorzugsweise kleiner 10°,
und/oder wobei
- der zweite Schlupfbetrag einem zweiten Drehversatz (α2) größer als 30° entspricht, insbesondere größer als 90° und vorzugsweise größer gleich 360°.

6. Elektrischer Klappenantrieb nach einem der Ansprüche 1 - 5, wobei das Eingangsglied (42) oder das Ausgangsglied eine in Umfangsrichtung (U) verlaufende erste Kupplungskontur (56) aufweist, wobei das andere Glied (44) eine in Umfangsrichtung (U) verlaufende zweite Kupplungskontur (58) aufweist, die einen Konturfolger (68) aufweist, wobei der Konturfolger (68) vorzugsweise mit einer axialen Federkraft (F) gegen die erste Kupplungskontur (56) angedrückt ist.

7. Elektrischer Klappenantrieb nach Anspruch 6, wobei die erste Kupplungskontur (56) eine Konturbasis aufweist, in die der Kupplungsfolger (68) in der Grundposition (G) angedrückt ist, und einen ersten Neigungsabschnitt (62) aufweist, der gegenüber der Umfangsrichtung (U) um einen ersten Neigungswinkel (β1) im Bereich von 10° bis 65° geneigt ist.

8. Elektrischer Klappenantrieb nach Anspruch 6 oder 7, wobei die erste Kupplungskontur (56) einen zweiten Neigungsabschnitt (64) aufweist, der gegenüber der Umfangsrichtung (U) um einen zweiten Neigungswinkel (β2) geneigt ist, der kleiner ist als 90° und größer als der erste Neigungswinkel (β1).

9. Elektrischer Klappenantrieb nach einem der Ansprüche 6 - 8, wobei die erste Kupplungskontur (56) einen Geradabschnitt (66) aufweist, der parallel zu der Umfangsrichtung (U) ausgerichtet ist.

10. Elektrischer Klappenantrieb nach einem der Ansprüche 1 - 9, wobei das Eingangsglied (42) als Ringelement ausgebildet ist, das axial verschieblich an dem Ausgangsglied (44) gelagert ist, wobei an dem Eingangsglied (42) vorzugsweise wenigstens ein Sensorelement (84) der Sensoranordnung (52) festgelegt ist.

11. Elektrischer Klappenantrieb nach Anspruch 6 und nach Anspruch 10, wobei zwischen dem Ausgangsglied (44) und dem Eingangsglied (42) eine Federanordnung (80) angeordnet ist, mittels der der Konturfolger (68) gegen die erste Kupplungskontur (56) angedrückt ist.

12. Elektrischer Klappenantrieb nach einem der Ansprüche 1 - 11, mit einem Gehäuse (70), in dem der Elektromotor (30) angeordnet ist, wobei die Antriebswelle (32) und die Abtriebswelle (46) vorzugsweise windschief zueinander ausgerichtet sind.

13. Elektrischer Klappenantrieb nach Anspruch 12, wobei die Abtriebswelle (46) drehbar in Bezug auf das Gehäuse (70) gelagert ist, wobei das Gehäuse (70) eine Öffnung (71) aufweist, über die ein Klappengetriebe (36) mit der Abtriebswelle (46) verbindbar ist.

14. Klappenanordnung, mit
- einer Klappe (10) zum Verschließen einer Öffnung und
- einem elektrischen Klappenantrieb (20) nach einem der Ansprüche 1 - 13, mittels dessen die Klappe (10) zwischen einer Schließstellung (22) und einer Offenstellung (24) und/oder zwischen einer Offenstellung (24) und einer Schließstellung bewegbar ist.

15. Verfahren zum Öffnen und/oder zum Schließen einer Klappe (10) mittels eines elektrischen Klappenantriebs (20) nach einem der Ansprüche 1 - 13, mit den Schritten:
- Erfassen eines Schlupfes der Kupplungsanordnung (40), der durch eine betätigende Bewegung (B1, B2) der Klappe (10) verursacht ist, und
- Ansteuern des Elektromotors (30), um die Klappe (10) von der Schließstellung (22) in die Offenstellung (24) oder umgekehrt zu verfahren.

## Claims

1. Electric flap drive (20), in particular for a charging or fuel tank flap (10) of a motor vehicle (K), comprising:
- an electric motor (30) which has a drive shaft (32),
- an output shaft (46) which is coupleable to a flap (10),
- a drive gear arrangement (34) which establishes a transmission ratio between the drive shaft (32) and the output shaft (46),
- a clutch arrangement (40) which has an input member (42) connected to the drive shaft (32) and an output member (44) connected to the output shaft (46), which are frictionally coupled in a basic position (G), and
- a sensor arrangement (52) which is configured to detect a slip of the clutch arrangement (40) caused by an actuating movement (B1, B2) of the flap (10).

2. Electric flap drive according to claim 1, wherein the drive gear arrangement (34) is arranged between the drive shaft (32) and the input member (42), wherein the drive gear arrangement (34) preferably comprises a self-locking worm gear (74).

3. Electric flap drive according to claim 1 or 2, wherein the input member (42) and the output member (44) are configured such that the input member (42) and the output member (44) are axially displaced relative to each other upon a relative rotation, and/or wherein the sensor arrangement (52) is configured to detect a relative axial displacement (H) between the input member (42) and the output member (44) and/or a relative rotational displacement (α) between the input member (42) and the output member (44).

4. Electric flap drive according to any one of claims 1 to 3, wherein the clutch arrangement (40) is configured as a two-stage slip clutch, wherein the input member (42) and the output member (44) are displaceable relative to each other by a limited first slip amount (H1; α1) upon application of a first torque (T1) to the output member (44), and are displaceable relative to each other by a second slip amount (H2; α2), which is greater than the first slip amount, upon application of a second torque (T2) to the output member (44), so that incorrect operating movements of the flap (10) can be absorbed.

5. Electric flap drive according to claim 4, wherein:
- the first slip amount corresponds to a first rotational displacement (α1) less than or equal to 45°, in particular less than 20° and preferably less than 10°, and/or wherein
- the second slip amount corresponds to a second rotational displacement (α2) greater than 30°, in particular greater than 90° and preferably greater than or equal to 360°.

6. Electric flap drive according to any one of claims 1 to 5, wherein the input member (42) or the output member has a first clutch contour (56) extending in the circumferential direction (U), wherein the other member (44) has a second clutch contour (58) extending in the circumferential direction (U), which has a contour follower (68), wherein the contour follower (68) is preferably pressed against the first clutch contour (56) with an axial spring force (F).

7. Electric flap drive according to claim 6, wherein the first clutch contour (56) has a contour base (60), into which the contour follower (68) is pressed in the basic position (G), and has a first inclined section (62) which is inclined with respect to the circumferential direction (U) by a first angle of inclination (β1) in the range of 10° to 65°.

8. Electric flap drive according to claim 6 or 7, wherein the first clutch contour (56) has a second inclined section (64) which is inclined with respect to the circumferential direction (U) by a second angle of inclination (β2) which is smaller than 90° and greater than the first angle of inclination (β1).

9. Electric flap drive according to any one of claims 6 to 8, wherein the first clutch contour (56) has a straight section (66) which is aligned parallel to the circumferential direction (U).

10. Electric flap drive according to any one of claims 1 to 9, wherein the input member (42) is configured as a ring element which is mounted axially displaceably on the output member (44), wherein at least one sensor element (84) of the sensor arrangement (52) is preferably fixed on the input member (42).

11. Electric flap drive according to claim 6 and claim 10, wherein a spring arrangement (80) is arranged between the output member (44) and the input member (42), by means of which the contour follower (68) is pressed against the first clutch contour (56).

12. Electric flap drive according to any one of claims 1 to 11, with a housing (70) in which the electric motor (30) is arranged, wherein the drive shaft (32) and the output shaft (46) are preferably oriented skewed to each other.

13. Electric flap drive according to claim 12, wherein the output shaft (46) is mounted rotatably with respect to the housing (70), wherein the housing (70) has an opening (71) via which a flap gear (36) is connectable to the output shaft (46).

14. Flap arrangement, comprising:
- a flap (10) for closing an opening and
- an electric flap drive (20) according to any one of claims 1 to 13, by means of which the flap (10) is movable between a closed position (22) and an open position (24) and/or between an open position (24) and a closed position.

15. Method for opening and/or closing a flap (10) by means of an electric flap drive (20) according to any one of claims 1 to 13, with the steps of:
- detecting a slip of the clutch arrangement (40) which is caused by an actuating movement (B1, B2) of the flap (10), and
- actuating the electric motor (30) to move the flap (10) from the closed position (22) to the open position (24) or vice versa.

## Revendications

1. Entraînement pour trappe (20) électrique, en particulier pour une trappe de chargement ou de réservoir (10) d'un véhicule automobile (K), comportant
- un moteur électrique (30) qui présente un arbre d'entraînement (32),
- un arbre de sortie (46) qui peut être accouplé à une trappe (10),
- un agencement formant engrenage d'entraînement (34) qui établit une transmission entre l'arbre d'entraînement (32) et l'arbre de sortie (46),
- un agencement d'accouplement (40) qui présente un élément d'entrée (42) relié à l'arbre d'entraînement (32) et un élément de sortie (44) relié à l'arbre de sortie (46), lesquels sont accouplés par friction dans une position de base (G), et
- un agencement à capteur (52) configuré pour détecter un patinage de l'agencement d'accouplement (40) provoqué par un mouvement d'actionnement (B1, B2) de la trappe (10).

2. Entraînement pour trappe électrique selon la revendication 1, dans lequel l'agencement formant engrenage d'entraînement (34) est disposé entre l'arbre d'entraînement (32) et l'élément d'entrée (42), dans lequel l'agencement formant engrenage d'entraînement (34) présente de préférence un engrenage à vis sans fin autobloquant (74).

3. Entraînement pour trappe électrique selon la revendication 1 ou 2, dans lequel l'élément d'entrée (42) et l'élément de sortie (44) sont conçus de sorte que l'élément d'entrée (42) et l'élément de sortie (44) sont décalés axialement l'un par rapport à l'autre lors d'une rotation relative, et/ou dans lequel l'agencement à capteur (52) est configuré pour détecter un décalage axial (H) relatif entre l'élément d'entrée (42) et l'élément de sortie (44) et/ou un décalage de rotation (α) relatif entre l'élément d'entrée (42) et l'élément de sortie (44).

4. Entraînement pour trappe électrique selon l'une des revendications 1 à 3, dans lequel l'agencement d'accouplement (40) est réalisé sous forme d'accouplement à glissement à deux étages, dans lequel l'élément d'entrée (42) et l'élément de sortie (44), lorsqu'un premier couple de rotation (T1) est appliqué à l'élément de sortie (44), peuvent être déplacés de manière relative l'un par rapport à l'autre d'une première valeur de patinage (H1 ; α1) et, lorsqu'un second couple de rotation (T2) est appliqué à l'élément de sortie (44), ils peuvent être déplacés de manière relative l'un par rapport à l'autre d'une seconde valeur de patinage (H2 ; α2) qui est supérieure à la première valeur de patinage, de sorte que des mouvements d'erreur de manipulation de la trappe (10) peuvent être absorbés.

5. Entraînement pour trappe électrique selon la revendication 4, dans lequel
- la première valeur de patinage correspond à un premier décalage de rotation (α1) inférieur ou égal à 45°, en particulier inférieur à 20° et de préférence inférieur à 10°, et/ou dans lequel
- la seconde valeur de patinage correspond à un second décalage de rotation (α2) supérieur à 30°, en particulier supérieur à 90° et de préférence supérieur ou égal à 360°.

6. Entraînement pour trappe électrique selon l'une des revendications 1 à 5, dans lequel l'élément d'entrée (42) ou l'élément de sortie présente un premier contour d'accouplement (56) s'étendant dans la direction circonférentielle (U), dans lequel l'autre élément (44) présente un second contour d'accouplement (58) s'étendant dans la direction circonférentielle (U) et présentant un élément de suivi de contour (68), dans lequel l'élément de suivi de contour (68) est de préférence pressé contre le premier contour d'accouplement (56) avec une force élastique (F) axiale.

7. Entraînement pour trappe électrique selon la revendication 6, dans lequel le premier contour d'accouplement (56) présente une base de contour dans laquelle l'élément de suivi d'accouplement (68) est pressé dans la position de base (G), et présente une première section d'inclinaison (62) inclinée par rapport à la direction circonférentielle (U) à un premier angle d'inclinaison (β1) dans la plage allant de 10° à 65°.

8. Entraînement pour trappe électrique selon la revendication 6 ou 7, dans lequel le premier contour d'accouplement (56) présente une seconde section d'inclinaison (64) inclinée par rapport à la direction circonférentielle (U) à un second angle d'inclinaison (β2) qui est inférieur à 90° et supérieur au premier angle d'inclinaison (β1).

9. Entraînement pour trappe électrique selon l'une des revendications 6 à 8, dans lequel le premier contour d'accouplement (56) présente une section rectiligne (66) orientée parallèlement à la direction circonférentielle (U).

10. Entraînement pour trappe électrique selon l'une des revendications 1 à 9, dans lequel l'élément d'entrée (42) est réalisé sous forme d'élément annulaire qui est monté de manière à pouvoir coulisser axialement sur l'élément de sortie (44), dans lequel au moins un élément formant capteur (84) de l'agencement à capteur (52) est de préférence fixé à l'élément d'entrée (42).

11. Entraînement pour trappe électrique selon la revendication 6 et selon la revendication 10, dans lequel un agencement élastique (80) est disposé entre l'élément de sortie (44) et l'élément d'entrée (42), agencement élastique au moyen duquel l'élément de suivi de contour (68) est pressé contre le premier contour d'accouplement (56).

12. Entraînement pour trappe électrique selon l'une des revendications 1 à 11, comportant un boîtier (70) dans lequel est disposé le moteur électrique (30), dans lequel l'arbre d'entraînement (32) et l'arbre de sortie (46) sont de préférence orientés de manière gauchie l'un par rapport à l'autre.

13. Entraînement pour trappe électrique selon la revendication 12, dans lequel l'arbre de sortie (46) est monté de manière à pouvoir tourner par rapport au boîtier (70), dans lequel le boîtier (70) présente une ouverture (71) par l'intermédiaire de laquelle un engrenage de trappe (36) peut être relié à l'arbre de sortie (46).

14. Agencement à trappe, comportant
- une trappe (10) pour la fermeture d'une ouverture, et
- un entraînement pour trappe (20) électrique selon l'une des revendications 1 à 13, au moyen duquel la trappe (10) peut être déplacée entre une position de fermeture (22) et une position d'ouverture (24) et/ou entre une position d'ouverture (24) et une position de fermeture.

15. Procédé permettant l'ouverture et/ou la fermeture d'une trappe (10) au moyen d'un entraînement pour trappe (20) électrique selon l'une des revendications 1 à 13, comprenant les étapes consistant à :
- détecter un patinage de l'agencement d'accouplement (40) provoqué par un mouvement d'actionnement (B1, B2) de la trappe (10), et
- commander le moteur électrique (30) pour faire passer la trappe (10) de la position de fermeture (22) à la position d'ouverture (24) ou inversement.
